# EUROPÄISCHE PATENTSCHRIFT

(11) **EP 1 241 506 B1**
(45) Veröffentlichungstag und Bekanntmachung des Hinweises auf die Patenterteilung: **18.10.2006**
(21) Anmeldenummer: 02100260.5
(22) Anmeldetag: 15.03.2002
(51) Int. Cl.: G02B 21/24, G02B 21/22

(54) **Autofokus-Mikroskopsystem**
Autofocus microscope system
Système de microscope à mise au point automatique

(30) Priorität: 17.03.2001 DE 10113084
(43) Veröffentlichungstag der Anmeldung: 18.09.2002
(73) Patentinhaber: Leica Microsystems (Schweiz) AG, 9435 Heerbrugg (CH)
(72) Erfinder: SCHMALZ, Benedikt, 9445, Rebstein (CH)
(74) Vertreter: Rosenich, Paul

(56) Entgegenhaltungen:
- EP-A- 0 548 456
- WO-A-00/75709
- US-A- 5 239 170
- PATENT ABSTRACTS OF JAPAN vol. 1999, no. 09, 30. Juli 1999 (1999-07-30) -& JP 11 095091 A (OLYMPUS OPTICAL CO LTD), 9. April 1999 (1999-04-09)

## Beschreibung

Die Erfindung bezieht sich auf ein Autofokus-Mikroskopsystem gemäß dem Oberbegriff des Patentanspruchs 1.

Ein Autofokus-Mikroskopssystem, von dem bei der Formulierung des Oberbegriffs des Patentanspruchs 1 ausgegangen wird, ist das "Autofokus-System Leica AF 500". Auf dieses System wird im übrigen zur Erläuterung aller hier nicht näher beschriebenen Einzelheiten und zur Ergänzung der Offenbarung dieser Anmeldung ausdrücklich Bezug genommen.

Dieses bekannte System weist ein Stereomikroskop auf, in dessen Strahlengang in an sich bekannter Weise eine elektronische Kameraeinheit mit einem Bildaufnehmer zur Aufnahme des Mikroskopbildes angeordnet werden kann. Über eine Steuer- und Ausleseeinheit werden die Bildsignale (Videodaten) der Kameraeinheit in ein Mikroprozessor-System mit einem Signalprozessor eingelesen, das insbesondere eine Frame-Grabber-Karte aufweisen kann; mit der Frame-Grabber-Karte werden die Video-Daten direkt in den Arbeitspeicher des Mikroprozessor-Systems eingelesen. Das Mikroprozessor-System berechnet u. a. nach einem Algorithmus, ob die bisherige Fokus-Position "scharf eingestellt" ist, oder ob das Mikroskop "out of focus", d. h. nicht fokussiert ist. Wenn das Mikroskop nicht fokussiert ist, generiert das Mikroprozessor-System ein Stellsignal für die Steuereinheit des Mikroskops, durch das das Mikroskop in den Fokus gebracht, also scharf gestellt wird (Auto-Fokus-Funktion).

Dieses bekannte Autofokus-Mikroskopsystem erfordert damit eine vergleichsweise teure und aufwendig verkabelte Mikroprozessor-Einheit für die Scharfeinstellung. Dies ist insbesondere dann von Nachteil, wenn das Mikroskop-Bild lediglich auf einem Monitor angezeigt und nicht zusätzlich Bildverarbeitungs-Operationen unterzogen werden soll, so dass die Mikroprozessor-Einheit letztlich nur für die Scharfeinstellung benutzt wird.

Ferner ist aus dem Artikel: "Quick trials of a two megapixel digital camera for photomicrography" von Dave Walker, erschienen im Web-Magazin "Micscape", März 2000, ein Mikroskopsystem anderer Gattung bekannt, bei dem eine Autofokus-Digitalkamera an einem Okular eines Mikroskops angebracht und die Autofokus-Fähigkeit der Digitalkamera für das Scharfstellen auf das Okularbild genutzt wird. Dabei ist es allerdings erforderlich, dass das Mikroskop "vor-scharfeingestellt" wird, d.h. nicht zu weit "out of focus" ist.

Diese Vorgehensweise ermöglicht keinen Betrieb, der ohne den Eingriff eines Benutzers auskommt. Darüber hinaus treten beim Anbringen der Kamera an einem Okular Vignettierungen des Bildes auf.

Der Erfindung liegt die Aufgabe zugrunde, ein Autofokus-Mikroskopsystem gemäß dem Oberbegriff des Patentanspruchs 1 derart weiterzubilden, dass es ohne die Verwendung teurer Komponenten - wie einer separaten Autofokus-Mikroprozessor-Einheit - auskommt.

Eine erfindungsgemäße Lösung dieser Aufgabe ist im Patentanspruch 1 angegeben. Weiterbildungen der Erfindung sind Gegenstand der Ansprüche 2 folgende.

Der Erfindung liegt die Erkenntnis zugrunde, dass die Steuereinheiten von Digital-Kameramodulen, die häufig sogar einen Signalprozessor aufweisen, eine ausreichende Rechenkapazität haben, um aus den das Bild darstellenden Signalen einen Autofokus-Befehl zu erzeugen. Damit kann aufgrund der erfindungsgemäßen Vorgehensweise eine "Software-Lösung" anstelle der bisher üblichen "Hardware-Lösung" eingesetzt werden. Diese erfindungsgemäße Software-Lösung hat gegenüber den bekannten Vorgehensweisen einen deutlichen Kostenvorteil, da sie lediglich eine Software-Implementierung und keinen zusätzlichen Hardware-Aufwand erfordert.

Der von der Steuereinheit (softwaremäßig) generierte Autofokus-Befehl wird dann an eine Objektiv-Stelleinheit angelegt, die die Fokussierung des oder der Mikroskopobjektive steuert.

Besonders vorteilhaft ist es, dass als Steuereinheit der Kameraeinheit, die sowohl den Auslesevorgang als auch die softwaremäßige Generierung des Autofokus-Signals ausführt, eine handelsübliche Steuereinheit für eine Digitalkamera und insbesondere eine handelsübliche Signalprozessoreinheit für einen oder mehrere CCD-Chips eingesetzt werden kann. Derartige Steuereinheiten können aufgrund der großen Stückzahl, wie sie für StillKameras insbesondere für den Amateurbereich hergestellt werden, kostengünstig bezogen werden.

Als Mikroskop können alle handelsüblichen und bekannten Mikroskope und insbesondere Stereomikroskope verwendet werden. Die Kameraeinheit kann dabei an allen Stellen, wie sie aus dem Stand der Technik bekannt sind, angeordnet werden. Beispielsweise kann der Chip der Kameraeinheit am Ort eines Zwischenbildes - insbesondere nach dem oder den Mikroskopobjektiven - angeordnet werden. Selbstverständlich ist es auch möglich, die Kameraeinheit an das Okular - mit den bekannten Nachteilen - mit einem Standardflansch anzuflanschen.

Ebenso können als Mikroskope alle bekannten Mikroskope und insbesondere Stereomikroskope eingesetzt werden. Als Mikroskopobjektive dieser Mikroskope können Zoomobjektive und/oder auf einem auf wenigstens einem Objektivwechsler angeordnete Objektive mit Festbrennweite oder verstellbarer Brennweite eingesetzt werden.

Wenn als Mikroskopobjektiv bzw. als Mikroskopobjektive Zoomobjektive oder auf (wenigstens) einem Objektivwechsler angeordnete Objektive eingesetzt werden, ist es besonders bevorzugt, wenn auch die Brennweiteneinstellung des bzw. der Zoomobjektive und/oder die Stellung des oder der Objektivwechsler gesteuert werden. Diese Steuerung kann beispielsweise derart erfolgen, dass immer ein "optimaler" Bildausschnitt eingestellt wird.

Um die erfindungsgemäß vorgesehene softwaremäßige Lösung der Scharfeinstellung kompatibel mit einer Steuereinheit für das Mikroskop bzw. dessen Objektive zu gestalten, ist es besonders bevorzugt, wenn die Kamera-Steuereinheit und die Objektiv-Steuereinheit Schnittstelleneinheiten aufweisen, über die sie verbunden sind, und durch die die kompatible Übergabe der Daten bzw. Befehle gewährleistet ist.

Der erfindungsgemäße Grundgedanke, die Fokussierung "softwaremäßig" durch die Steuer- und Ausleseeinheit des Kameramoduls durchführen zulassen, ist nicht auf eine bestimmte Ausbildung der Kameraeinheit und des Mikroskops beschränkt. Vielmehr kann die Kameraeinheit in jeder an sich bekannten Weise im Strahlengang des Mikroskops oder am Okular bzw. einem der Okulare angeordnet und in an sich bekannter Weise mit einem oder mehreren CCD-Chips ausgebildet sein. Ebenso ist es möglich, als Mikroskop bekannte Mikroskop-Ausführungen einzusetzen.

Die Erfindung wird nachstehend anhand von Ausführungsbeispielen unter Bezugnahme auf die Zeichnungen näher beschrieben, in der zeigen:
Fig. 1 ein erstes Ausführungsbeispiel der Erfindung, und
Fig. 2 ein zweites Ausführungsbeispiel der Erfindung.

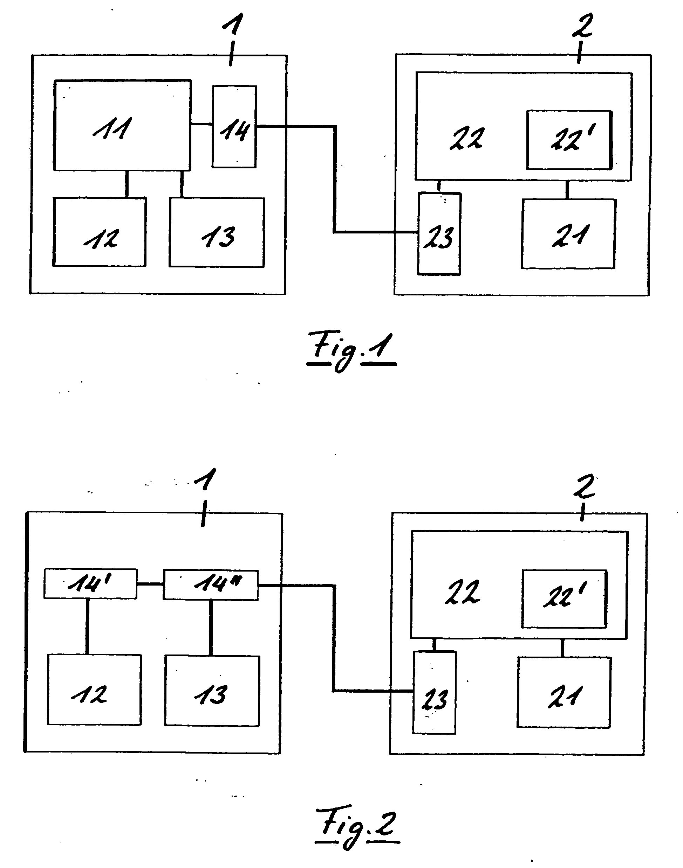

In den Fig. 1 und 2 sind gleiche Teile immer mit den selben Bezugszeichen bezeichnet. Deshalb wird bei der Beschreibung des Ausführungsbeispiels gemäß Fig. 2 auf die gesonderte Beschreibung der mit Fig. 1 übereinstimmenden Teile zumindest teilweise verzichtet.

Ein erstes Ausführungsbeispiel der Erfindung ist in Fig. 1 dargestellt, wobei das Mikroskop 1 und die elektronische Kameraeinheit 2 lediglich schematisch in Form eines "Blockschaltbildes" dargestellt sind. Das Mikroskop 1 weist in an sich bekannter Weise wenigstens ein bzw. bei Ausbildung des Mikroskops als Stereomikroskop zwei Mikroskopobjektive auf, die in den Figuren nicht dargestellt sind. Bei den Mikroskopobjektiven kann es sich - ohne dass die Erfindung hierauf beschränkt wäre - um Zoomobjektive handeln, die in einem bestimmten Rahmen - beispielsweise 1 zu 5 - eine Brennweitenverstellung und damit eine Vergrößerungseinstellung erlauben.

Zur Steuerung der nicht näher dargestellten Mikroskopobjektive ist bei dem in Fig. 1 dargestellten Ausführungsbeispiel eine Steuereinheit 11 vorgesehen, die über Stelleinheiten 12 bzw. 13 die Brennweiten-Einstellung und die Fokussierung des bzw. der Mikroskopobjektive steuert.

Die elektronische Kameraeinheit 2 weist wenigstens einen Bildaufnehmer 21 zur Aufnahme des Mikroskopbildes und eine Signalprozessoreinheit 22 für das Auslesen und Bearbeiten der das Bild darstellenden Signale des oder der Bildaufnehmer 21 auf. In das Ablaufsteuerprogramm der Signalprozessoreinheit 22 ist erfindungsgemäß ein zusätzlicher Algorithmus - schematisch mit 22' bezeichnet - integriert, der den Scharfstellungs-Zustand der aufgenommenen Bilder ermittelt. Ausdrücklich wird darauf hingewiesen, dass es sich bei der mit dem Bezugszeichen 22' bezeichneten Autofokus-Funktion nicht um ein zusätzliches Hardware-Element, sondern lediglich um einen in die Ablaufsteuerung der Signalprozessoreinheit 22 integrierten Autofokus-Algorithmus 22' handelt, der beispielsweise nach der Kontrastmethode die optimale Fokussierung ermittelt. Selbstverständlich sind auch andere - an sich bekannte - Kriterien für die Fokussierung verwendbar.

In Abhängigkeit von dem ermittelten Scharfstellungszustand generiert die Signalprozessoreinheit 22 ein Autofokussignal bzw. einen Autofokus-Befehl, der über eine Schnittstelleneinheit 23 zur Scharfstellung des bzw. der Mikroskopobjektive und damit der von der Kameraeinheit 2 aufgenommenen Bilder an das Mikroskop 1 weitergegeben wird.

Die Schnittstelleneinheit 23 ist hierzu bei dem in Fig. 1 gezeigten Ausführungsbeispiel mit einer korrespondierenden Schnittstelleneinheit 14 des Mikroskops 1 verbunden, so dass der von der Signalprozessoreinheit 22 generierte Autofokus-Befehl an der Steuereinheit 11 anliegt, die die Stelleinheit 13 für die Fokussierung des oder der nicht dargestellten Mikroskopobjektive steuert. Zusätzlich kann - wie bereits ausgeführt - die Steuereinheit 11 - gegebenenfalls aufgrund entsprechender Steuersignale der Signalprozessoreinheit 22 die Brennweite des Mikroskopobjektives über die Stelleinheit 12 steuern. Selbstverständlich kann die Brennweite auch aufgrund anderer Kriterien - beispielsweise aufgrund externer Steuerbefehle - gesteuert werden.

Fig. 2 zeigt eine Variante des in Fig. 1 dargestellten Ausführungsbeispiels, bei dem das Mikroskop 1 keine eigene Steuereinheit aufweist, die "Intelligenz" also vollständig in die Kameraeinheit 2 "verlagert" ist. Statt dessen sind zwei Schnittstelleneinheiten 14' und 14" vorgesehen, die über die Schnittstelle 23 der Kameraeinheit 2 direkt angesteuert werden, so dass die gesamte Signalaufbereitung für die Fokussierung und die Zoom-Einstellung durch die Signalprozessoreinheit 22 der Kameraeinheit 2 erfolgt. Hierdurch ergibt sich eine weitere, beträchtliche Kosteneinsparung.

Vorstehend ist die Erfindung anhand von Ausführungsbeispielen ohne Beschränkung des allgemeinen - den Ansprüchen entnehmbaren - Erfindungsgedankens beschrieben worden. Selbstverständlich sind innerhalb der vorstehenden Beschreibung die verschiedensten Abwandlungen möglich:
So ist es beispielsweise möglich, anstelle eines Bildaufnehmers 21 zwei oder drei Bildaufnehmer einzusetzen. Auch müssen nicht notwendigerweise als Steuereinheiten 22 in der Kameraeinheit 2 Signalprozessoren eingesetzt werden, vielmehr können beliebige Prozessoren, wie Mikroprozessoren oder Mikrokontroller oder sonstige Schaltungen verwendet werden.
Die Ermittlung des Fokussierungszustandes der Mikroskopobjektive kann auf die verschiedensten, aus dem Stand der Technik prinzipiell bekannten Methoden erfolgen.
Ferner kann die Signalprozessoreinheit 22 neben dem Auslesen der Bilder darstellenden Signale auch die Aufbereitung der Signale derart, dass sie auf einem Monitor dargestellt werden können, sowie gegebenenfalls auch Bildverarbeitungsoperationen ausführen.

### Bezugszeichenliste

- 1: Mikroskop
- 2: Kameraeinheit
- 11: Mikroskop-Steuereinheit
- 12: Zoom-Stelleinheit
- 13: Fokus-Stelleinheit
- 14: Schnittstelleneinheit
- 14' und 14": Schnittstelleneinheiten
- 21: Bildaufnehmer
- 22: Signalprozessoreinheit
- 22': Autofokus-Algorithmus
- 23: Schnittstelleneinheit

## Patentansprüche

1. Mikroskopsystem (100) mit einem Mikroskop (1), das wenigstens ein Mikroskopobjektiv aufweist, wobei das Mikroskopsystem (100) eine Autofokus-Funktion aufweist, durch die das oder die Mikroskopobjektive mit einer Fokus-Stelleinheit (13) fokussierbar sind, wobei eine Kamera (2) zur Aufnahme und Weiterleitung eines Mikroskopbildes an einen Hostrechner mit einer Bildfangschaltung angeordnet ist, und wobei von dem Hostrechner mit Bildfangschaltung ein Steuersignal an eine zentrale Steuereinheit (11) des Mikroskopsystems (100) weiterleitbar ist,
**dadurch gekennzeichnet, dass**
die zentrale Steuereinheit (11) des Mikroskopsystems (100) im Mikroskop (1) integriert ist und die Kamera (2) eine digitale Kamera ist und eine eigene Autofokus-Funktion mit einer Kamera-Autofokus-Steuereinheit (22) aufweist, wobei die Kamera-Autofokus-Steuereinheit (22) eine Signalprozessoreinheit ist in der ein Autofokus-Algorithmus (22') als Software implementiert ist, der im Betriebszustand aus dem Mikroskopbild einen Autofokus-Befehl erzeugt, der direkt an die Fokus-Stelleinheit (13) des Mikroskops (1) angelegt ist, und durch den die Fokus-Stelleinheit (13) zur Fokussierung des oder der Mikroskopobjektive steuerbar ist.

2. Mikroskopsystem (100) nach Anspruch 1, **dadurch gekennzeichnet, dass** die Kamera-Autofokus-Steuereinheit (22) der Kamera (2) als eine Signalprozessoreinheit für einen oder mehrere CCD-Chips (21) ausgebildet ist.

3. Mikroskopsystem (100) nach einem der vorhergehenden Ansprüche, **dadurch gekennzeichnet, dass** das Mikroskop (1) ein Stereomikroskop ist.

4. Mikroskopsystem (100) nach einem der vorhergehenden Ansprüche, **dadurch gekennzeichnet, dass** das oder die Mikroskopobjektive Zoomobjektive sind.

5. Mikroskopsystem (100) nach einem der vorhergehenden Ansprüche, **dadurch gekennzeichnet, dass** die Mikroskopobjektive auf wenigstens einem Objektivwechsler angeordnet sind.

6. Mikroskopsystem (100) nach Anspruch 4, **dadurch gekennzeichnet, dass** die zentrale Steuereinheit (11) des Mikroskopsystems (100) auch die Stelleinheit (12) für eine Brennweiteneinstellung des bzw. der Zoomobjektive steuert.

7. Mikroskopsystem (100) nach Anspruch 5, **dadurch gekennzeichnet, dass** die zentrale Steuereinheit (11) des Mikroskopsystems (100) den oder die Objektivwechsler steuert.

8. Mikroskopsystem (100) nach Anspruch 6 und 7, **dadurch gekennzeichnet, dass** die zentrale Steuereinheit (11) des Mikroskopsystems (100) die Fokus-Stelleinheit (13), die Brennweiten-Stelleinheit (12) und den oder die Objektivwechsler steuert.

9. Mikroskopsystem (100) nach Anspruch 1, **dadurch gekennzeichnet, dass** die Kamera-Autofokus-Steuereinheit (22) und die zentrale Steuereinheit (11) des Mikroskopsystems (100) Schnittstelleneinheiten (23 bzw. 14) aufweisen, über die sie verbunden sind.

10. Mikroskopsystem (100) nach Anspruch 1, **dadurch gekennzeichnet, dass** das Mikroskop (1) eine Fokus-Schnittstelleneinheit (14") aufweist, an der über eine Schnittstelle (23) der Kamera (2) der Autofokus-Befehl direkt anliegt, so dass die Kamera-Autofokus-Steuereinheit (22) der Kamera (2) die Fokus-Stelleinheit (13) für das oder die Mikroskopobjektive direkt ansteuert.

11. Mikroskopsystem (100) nach Anspruch 10, **dadurch gekennzeichnet, dass** die Kamera-Autofokus-Steuereinheit (22) auch die Stelleinheit (12) für die Brennweite oder den Objektivwechsler über eine Schnittstelleneinheit (14') direkt ansteuert.

12. Mikroskopsystem (100) nach einem der vorhergehenden Ansprüche, **dadurch gekennzeichnet, dass** die Kamera (2) im Strahlengang des Mikroskops (1) oder am Okular bzw. einem der Okulare angeordnet ist.

## Claims

1. Microscope system (100) having a microscope (1) which comprises at least one microscope objective, the microscope system (100) having an autofocus function by which the microscope objective or objectives can be focused using a focus adjustment unit (13), a camera (2) being arranged for recording a microscope image and forwarding it to a host computer with an image capture circuit, and a control signal being forwardable from the host computer with its image capture circuit to a central control unit (11) of the microscope system (100),
**characterized in that**
the central control unit (11) of the microscope system (100) is integrated in the microscope (1) and the camera (2) is a digital camera and has its own autofocus function with a camera autofocus control unit (22), the camera autofocus control unit (22) being a signal processor unit in which an autofocus algorithm (22') is implemented as software which, in the operating state, generates from the microscope image an autofocus command which is applied directly to the focus adjustment unit (13) of the microscope (1) and by which the focus adjustment unit (13) can be controlled for focusing the microscope objective or objectives.

2. Microscope system (100) according to Claim 1, **characterized in that** the camera autofocus control unit (22) of the camera (2) is designed as a signal processor unit for one or more CCD chips (21).

3. Microscope system (100) according to one of the preceding claims, **characterized in that** the microscope (1) is a stereo microscope.

4. Microscope system (100) according to one of the preceding claims, **characterized in that** the microscope objective or objectives are zoom objectives.

5. Microscope system (100) according to one of the preceding claims, **characterized in that** the microscope objectives are arranged on at least one objective changer.

6. Microscope system (100) according to Claim 4, **characterized in that** the central control unit (11) of the microscope system (100) also controls the adjustment unit (12) for a focal length setting of the zoom objective or objectives.

7. Microscope system (100) according to Claim 5, **characterized in that** the central control unit (11) of the microscope system (100) controls the objective changer or changers.

8. Microscope system (100) according to Claims 6 and 7, **characterized in that** the central control unit (11) of the microscope system (100) controls the focus adjustment unit (13), the focal length adjustment unit (12) and the objective changer or changers.

9. Microscope system (100) according to Claim 1, **characterized in that** the camera autofocus control unit (22) and the central control unit (11) of the microscope system (100) comprise interface units (23 and 14, respectively) via which they are connected.

10. Microscope system (100) according to Claim 1, **characterized in that** the microscope (1) comprises a focus interface unit (14") to which the autofocus command is applied directly via an interface (23) of the camera (2) so that the camera autofocus control unit (22) of the camera (2) directly drives the focus adjustment unit (13) for the microscope objective or objectives.

11. Microscope system (100) according to Claim 10, **characterized in that** the camera autofocus control unit (22) also directly drives the adjustment unit (12) for the focal length or the objective changer via an interface unit (14').

12. Microscope system (100) according to one of the preceding claims, **characterized in that** the camera (2) is arranged in the optical path of the microscope (1) or at the eyepiece or one of the eyepieces.

## Revendications

1. Système de microscope (100), comprenant un microscope (1) qui présente au moins un objectif de microscope, dans lequel le système de microscope (100) présente une fonction de mise au point automatique qui permet de focaliser le ou les objectifs de microscope à l'aide d'une unité de réglage de mise au point (13), dans lequel une caméra (2) est disposée pour enregistrer et retransmettre une image microscopique à un ordinateur hôte avec un circuit de capture d'image, et dans lequel l'ordinateur hôte avec circuit de capture d'image peut retransmettre un signal de commande à une unité centrale de commande (11) du système de microscope (100),
**caractérisé en ce que**
l'unité centrale de commande (11) du système de microscope (100) est intégrée dans le microscope (1) et la caméra (2) est une caméra numérique et présente sa propre fonction de mise au point automatique avec une unité de commande de mise au point automatique de caméra (22), dans lequel l'unité de commande de mise au point automatique de caméra (22) est une unité de processeur de signal dans laquelle un algorithme de mise au point automatique (22') est mis en oeuvre sous forme de logiciel qui génère à l'état de fonctionnement à partir de l'image microscopique une instruction de mise au point automatique qui est appliquée directement à l'unité de réglage de mise au point (13) du microscope (1) et qui permet de commander l'unité de réglage de mise au point (13) pour la focalisation du ou des objectifs de microscope.

2. Système de microscope (100) selon la revendication 1, **caractérisé en ce que** l'unité de commande de mise au point automatique de caméra (22) de la caméra (2) est réalisée comme une unité de processeur de signal pour une ou plusieurs puces CCD (21).

3. Système de microscope (100) selon l'une quelconque des revendications précédentes, **caractérisé en ce que** le microscope (1) est un stéréomicroscope.

4. Système de microscope (100) selon l'une quelconque des revendications précédentes, **caractérisé en ce que** le ou les objectifs de microscope sont des objectifs à focale variable.

5. Système de microscope (100) selon l'une quelconque des revendications précédentes, **caractérisé en ce que** les objectifs de microscope sont disposés sur au moins un changeur d'objectif.

6. Système de microscope (100) selon la revendication 4, **caractérisé en ce que** l'unité centrale de commande (11) du système de microscope (100) commande également l'unité de réglage (12) pour un réglage de distance focale du ou des objectifs à focale variable.

7. Système de microscope (100) selon la revendication 5, **caractérisé en ce que** l'unité centrale de commande (11) du système de microscope (100) commande le ou les changeurs d'objectif.

8. Système de microscope (100) selon la revendication 6 ou 7, **caractérisé en ce que** l'unité centrale de commande (11) du système de microscope (100) commande l'unité de réglage de mise au point (13), l'unité de réglage de distance focale (12) et le ou les changeurs d'objectif.

9. Système de microscope (100) selon la revendication 1, **caractérisé en ce que** l'unité de commande de mise au point automatique de caméra (22) et l'unité centrale de commande (11) du système de microscope (100) présentent des unités d'interface (23 ou 14) par lesquelles elles sont reliées.

10. Système de microscope (100) selon la revendication 1, **caractérisé en ce que** le microscope (1) présente une unité d'interface de mise au point (14") à laquelle s'applique directement l'instruction de mise au point automatique par l'intermédiaire d'une interface (23) de la caméra (2), de sorte que l'unité de commande de mise au point automatique de caméra (22) de la caméra (2) pilote directement l'unité de réglage de mise au point (13) pour le ou les objectifs de microscope.

11. Système de microscope (100) selon la revendication 10, **caractérisé en ce que** l'unité de commande de mise au point automatique de caméra (22) pilote également directement l'unité de réglage (12) pour la distance focale ou le changeur d'objectif par l'intermédiaire d'une unité d'interface (14').

12. Système de microscope (100) selon l'une quelconque des revendications précédentes, **caractérisé en ce que** la caméra (2) est disposée sur la trajectoire des faisceaux du microscope (1) ou au niveau de l'oculaire ou d'un des oculaires.
